(19) Europäisches Patentamt
European Patent Office
Office européen des brevets

(11) EP 4 749 521 A1

(12) EUROPEAN PATENT APPLICATION

(43) Date of publication:
27.05.2026 Bulletin 2026/22

(21) Application number: 24214615.7

(22) Date of filing: 21.11.2024

(51) International Patent Classification (IPC):
G06N 3/02 (2006.01)    G06N 10/20 (2022.01)
G06N 10/60 (2022.01)    G06N 7/01 (2023.01)
G06N 20/00 (2019.01)

(52) Cooperative Patent Classification (CPC):
G06N 3/02; G06N 10/20; G06N 10/60; G06N 7/01;
G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Mastercard International Incorporated
Purchase, NY 10577 (US)

(72) Inventors:
• MALEKI, Mehrdad
Maynooth (IE)
• KOTHALE, Nitish
Dublin (IE)

(74) Representative: Murgitroyd & Company
165-169 Scotland Street
Glasgow G5 8PL (GB)

(54) LARGE LANGUAGE MODELS USING QUANTUM ENTANGLEMENT

(57) A method 400 of storing a trained model using a quantum system comprises receiving 404 at least one parameter set representative of the trained model, wherein the at least one parameter set comprises one or more parameters, generating 406 at least one entangled state based on the at least one parameter set and storing 408 the at least one entangled state in a quantum system. Measurement of the entangled state enables at least one parameter of the at least one parameter set to be determined.

Figure 4

**Description**

**FIELD OF THE INVENTION**

The present disclosure relates to quantum computing and information processing. The present disclosure more particularly relates to methods, systems and tools which employ quantum entanglement techniques in the context of Large Language Models (LLMs). The present disclosure may find particular use in performing language-related tasks such as translation, summarization, question answering, and text generation.

**BACKGROUND TO THE INVENTION**

Large Language Models (LLMs) are advanced computational models designed to understand, generate, and manipulate human language. They are built using deep learning techniques, particularly neural networks, and are trained on vast amounts of text data. These models are capable of performing a wide range of language-related tasks such as translation, summarization, question answering, and text generation. LLMs utilize patterns within data to predict and generate coherent and contextually relevant text, often exhibiting an understanding of nuances and subtleties in language. Their ability to generate coherent text enables applications in content creation, customer support, and programming assistance. Additionally, LLMs can process and analyse vast amounts of data, providing insights and improving decision-making across various domains. Their versatility and adaptability to different tasks make them powerful tools in both commercial and research settings.

LLMs in common use today can be slow to generate outputs for several reasons. For example, since trained LLMs can comprise billions of parameters, the large number of computations and calculations involved in handling such extensive models can lead to slow response times. Furthermore, generating an output involves running an input through multiple layers of a model, which takes time, especially when processing complex inputs and/or generating long or multifaceted responses. Ultimately, the speed of processing is often limited by the hardware used. While systems employing Graphics Processing Units or Tensor Processing Units can speed up computations, the demand for resources can still be high, especially when multiple requests are handled simultaneously. These factors contribute to the significant latency experienced when interacting with LLMs.

The present disclosure has been devised to mitigate or overcome at least some of the above-mentioned problems.

**SUMMARY OF THE DISCLOSURE**

In accordance with an aspect of the present disclosure, there is provided a method of storing a trained model using a quantum system, the method comprising: receiving at least one parameter set representative of the trained model, wherein the at least one parameter set comprises one or more parameters; generating at least one entangled state based on the at least one parameter set; and storing the at least one entangled state in a quantum system, wherein measurement of the entangled state enables at least one parameter of the at least one parameter set to be determined. Advantageously, storing the trained model using a quantum system allows query times for obtaining the outputs of the trained model to be reduced.

In some embodiments, the parameter set comprises at least one input and at least one output. In some embodiments, the at least one input and the at least one output are represented as vectors. Advantageously, the input and output can be used to represent complex objects, such as natural language syntax, words and sentences.

In some embodiments, the parameter set comprises at least one time value. In some embodiments, the time value is a scalar. In some embodiments, the time value is represented as a vector. In some embodiments, the output of the trained model is dependent on the input and the time value.

In some embodiments, the at least one entangled state is stored in a quantum device comprising one or more qubits.

In some embodiments, the method further comprises: determining whether a full representation of the trained model is stored in the quantum device.

In some embodiments, the method further comprises: repeating the receiving, generating and storing steps until a full representation of the trained model is stored in the quantum device. Advantageously, a full representation of the trained model can be stored in the quantum device, allowing faster queries to be performed on the trained model.

In some embodiments, a plurality of entangled states are stored in the quantum device.

In some embodiments, generating at least one entangled state based on the at least one parameter set comprises: initialising one or more qubits to represent the one or more parameters in the at least one parameter set.

In some embodiments, generating at least one entangled state based on the at least one parameter set comprises: using quantum gates to create entanglement between the values of the at least one parameter set. Advantageously, the values of the parameter sets can be stored using entangled quantum states.

In some embodiments, generating at least one entangled state based on the at least one parameter set comprises: encoding the parameter set as quantum states.

In some embodiments, generating at least one entangled state based on the at least one parameter set comprises: applying a Hadamard gate on the encoded input state to produce a superposition of all possible inputs.

In some embodiments, generating at least one entangled state based on the at least one parameter set comprises: applying a CNOT gate to entangle the superposition of inputs with the encoded time state.

In some embodiments, generating at least one entangled state based on the at least one parameter set comprises: applying a CNOT gate to further entangle the result with the output, thereby producing a state which can be stored.

In some embodiments, the method further comprises: receiving a query, wherein the query comprises an input and a time.

In some embodiments, the method further comprises: measuring the at least one entangled state in the quantum system to determine at least one parameter of the at least one parameter set. Advantageously, measuring the entangled state allows parameters and parameter sets stored in the quantum system to be recovered.

In some embodiments, the method comprises measuring each entangled state in the quantum system to determine each parameter of each parameter set. Advantageously, the entire trained model can be recovered from the quantum system by measuring each entangled state therein.

In some embodiments, the method further comprises: identifying the output from the recovered at least one parameter set.

In some embodiments, identifying the output from the recovered at least one parameter set comprises performing a lookup in a lookup table. Advantageously, the output can be determined quickly by simply looking up the output from the results of the measurement.

In some embodiments, the trained model is a Large Language Model, LLM.

In some embodiments, the trained model is a naive Bayesian classifier

In accordance with another aspect of the present disclosure, there is provided a system for storing a trained model using a quantum system, the system comprising: a classical computer for receiving at least one parameter set representative of the trained model, wherein the at least one parameter set comprises one or more parameters; and a quantum computer for generating at least one entangled state based on the at least one parameter set and storing the at least one entangled state in a quantum system, wherein measurement of the entangled state enables at least one parameter of the at least one parameter set to be determined.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

**BRIEF DESCRIPTION OF THE DRAWINGS**

One or more embodiments of the disclosure will now be described, by way of example only, with reference to the accompanying drawings, in which:

Figure 1 shows an example computer system for implementing aspects of the present invention;

Figure 2 shows a network environment for implementing aspects of the present invention;

Figure 3 shows a schematic of a trained model such as a neural network or LLM;

Figure 4 shows a method for storing a trained model using a quantum system or device in accordance with an aspect of the present invention;

Figure 5 shows a schematic of a system for generating an entangled state from a parameter set in accordance with an aspect of the present invention; and

Figure 6 shows a method for identifying an output from a trained model stored using a quantum system or device in accordance with an aspect of the present invention.

Note that the drawings are schematic and accompany the description, illustrating preferred and exemplary embodiments and not necessarily being drawn to scale.

**DETAILED DESCRIPTION**

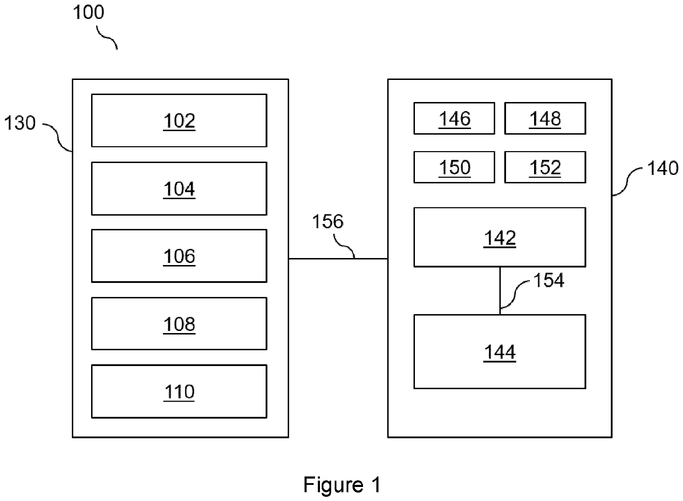

Figure 1 shows an example computing system 100 for implementing the present invention. One or more such computer systems 100 are arranged to perform or execute one or more steps of the methods described herein. In particular, software running on one or more computer systems 100 perform one or more steps of the methods described herein.

The computing system 100 comprises a classical computer 130 coupled to a quantum computer 140 via an interface 156.

The classical computer 130 comprises a processing element 102, a memory unit 104, an input/output (I/O) interface 106, a communications interface 108, and a bus 110. Whilst Figure 1 illustrates a classical computer 130 having particular components and in a particular arrangement, it can be envisaged that the classical computer 130 comprises any suitable number of components in any suitable arrangement of components. The classical computer 130 may further comprise additional classical computing elements as known in the art.

The processing element 102 is arranged to perform operations, such as arithmetical and logical operations, on data, for example data stored on the memory device 104. The processing element 102 is of any suitable construction for performing these operations. For example, the processing element 102 comprises one or more hardware components for performing these operations, such as processors, e.g., one or more central processing units (CPUs), accelerator processors, application specific processors and/or field programmable gate arrays (FPGAs), and other equipment such as Application Specific Integrated Circuits (ASICs). The processing element 102 performs operations including: fetching instructions associated with the methods disclosed herein from program memory, such as a RAM component of the memory device 104; decoding the instructions; and executing the instructions to carry out one or more steps of the methods described herein.

The memory unit 104 is arranged to communicate with the processing element 102, for example via the bus 110. The memory unit 104 comprises one or more hardware components, such as one or more primary memory units and one or more secondary memory units. The one or more primary memory units, for example including a random access memory (RAM) unit, can temporarily store data for reading and writing purposes by the processing element 102. The primary memory may be any suitable RAM, and may comprise one or more RAM units. The present disclosure is not limited to a particular type of primary memory. The one or more secondary memory units comprise memory, i.e., computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The secondary memory may be any suitable memory, and may comprise one or more secondary memory units. The present disclosure is not limited to a particular type of secondary memory. The memory stores software comprising a respective instance of at least one client application arranged to run on the processing element 102 for carrying out various steps of the methods disclosed herein. The client application may be initially provided to the classical computer 130 on suitable computer-readable storage medium or media, e.g., downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The I/O interface 106 facilitates communication between the classical computer 130 and one or more computer devices arranged to facilitate communication between a user and the classical computer 130. For example, the one or more computer devices may include, but is not limited to including, a display device, a keyboard, a speaker, a printer, any other suitable device, or any combination of devices thereof.

The communication interface 108 facilitates communication between the classical computer 130 and any other one or more computer systems and/or one or more networks. The communication interface 108 may comprise a network interface controller, network adapter, wireless NIC, or wireless adapter for communicating with a network.

The quantum computer 140 comprises a quantum computing unit 142 and a quantum memory unit 144, a plurality of coupling devices 146, a bias device 148, and a state determination device 150. The quantum computing unit 142 comprises a number N of qubits 152. The qubits 152 may be for example, superconducting flux devices 152 having a circulating current. For example, the superconducting flux devices 152 may comprise a loop of superconducting material interrupted by at least one Josephson junction, as is known in the art. Further qubit implementations may be envisaged. The quantum computing unit 142 is configured to provide data to, and receive data from, the quantum memory unit 144 by means of a memory interface 154. A "state" of the quantum computing unit 142 corresponds to the respective state of all of the N qubits 152. An example state of a qubit is a 0 state. The 0 state may correspond to, for example, a clockwise current around the superconducting flux devices 152 which may induce a downward magnetic field. A counterclockwise current around the superconducting flux devices may induce an upwards magnetic field which references a state 1. The state of the quantum computing unit 142 may be described by a bit string having a length N. Thus, there are $2^N$ possible configurations for the state of the quantum computing unit 142. The quantum computer 140 is preferably suitable for implementing quantum circuits. Other quantum computing models may be envisaged.

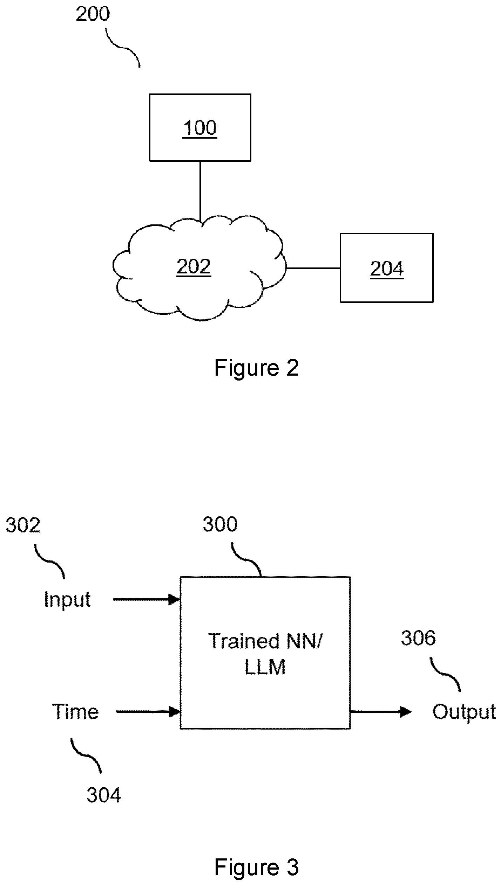

Figure 2 shows an example network environment for facilitating implementation of the present invention.

The classical computer 130 of the computing system 100 may communicate with any network, such as a network 202, via the communication interface 108. The network 202 may comprise an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any combination thereof. Any network 202 may be envisaged. The network 202 can facilitate communication between the classical computer 130 and one or more third party computer systems 204. It will be appreciated that the classical computer 130 and the third party computer systems 204 may be connected to each other directly, such that the network 202 is not needed.

Third party computing system 204 may be a network addressable computing system. Third party computing system 204 may generate, store, receive, and transmit data, such as, for example, outputs of a trained model, as will be discussed further herein. Communication with the third party computing system 204 may comprise the use of one or more application programming interfaces (APIs). One or more third party computing systems 204 may be present, and each of the one or more third party computing systems 204 may be associated with a respective third party.

Figure 3 shows an example of a trained Neural Network (NN) or LLM 300, which can be referred to as a trained model. In examples, the trained model may be a LLM or naive Bayesian classifier. In this example, the trained model 300 has been trained using training data such that providing a particular input 302 to the trained model 300 at a particular time 304 causes the trained model 300 to produce a particular output 306. In this example, the input 302 is a vector (which may be representative of e.g. a word or sentence), time 304 is a scalar value or vector representing the time at which the input 302 is provided to the trained model 300, and the output 306 is a vector (which may also be representative of e.g. a word or sentence).

The output 306 of the trained model 300 is dependent on the input 302 and the time 304. In other words, the time at which the input 302 is provided to the model 300 has an effect on the output 306 produced by the trained model 300. An identical input 302 provided at a different time 304 will produce a different output 306. In this sense, the output of the trained model is time-sensitive.

In an example, we may assume a simplified trained model 300 in which the input, time and output are all classical bits and can take the value of either 0 or 1. Here, the input 302 and output 306 are both vectors of length 1, and time 304 is a scalar value. In other examples, the input 302, time 304 and output 306 can be vectors of any arbitrary length.

In this example, the model 300 has been trained such that the outputs shown in Table 1 are provided for each possible combination of input/time values. Each numerical entry in Table 1 can be referred to as a parameter of the trained model, and the set of parameters in each row can be referred to as a 'parameter set'.

*Table 1: An example trained model*

| Input | Time | Output |
|-------|------|--------|
| 0 | 0 | 0 |
| 0 | 1 | 1 |
| 1 | 0 | 1 |
| 1 | 1 | 0 |

According to Table 1, when an input 302 of 0 is provided to the trained model 300 at time=0, then the output 306 is 0. If the same input 302 of 0 is provided to the trained model 300 at time=1, then the output 306 will be 1. As can be appreciated, the output 306 of the trained model 300 is dependent on both of the input 302 and the time 304. The operations carried out by the trained model 300 may be expressed as:

$$output = M(input, time)$$

where *output* is the output 306, *M* represents the trained model 300, *input* is the input 302 and *time* is the time 304. In examples, $M(0, 0) = 0$ and $M(0, 1) = 1$.

The example trained model 300 can be implemented using a classical computer, such as the classical computer 130 discussed above with respect to figure 1 or the third party computer systems 204 shown in figure 2. In practice, the trained model 300 can be implemented as a neural network having two inputs, one output and a plurality of layers formed of interconnected nodes located between the inputs and the output. In more complicated examples, a model may be implemented using a neural network having more than two inputs, more than one output and a large number of layers (e.g.>10, >100) formed of interconnected nodes.

Use of a classical computer to implement the trained model 300 has drawbacks because such a computer may lack the computational efficiency and processing power required to handle the extensive calculations and data throughput needed for neural processing, leading to slower performance, long query response times and high energy consumption. Such problems are especially acute for complex models having large numbers of inputs/outputs and nodes/layers. Since trained LLMs can comprise billions of parameters, the large number of computations and calculations involved in handling such extensive models can lead to slow response times. Furthermore, generating a response involves running an input through multiple layers of a model, which takes time, especially when processing complex inputs and/or generating long or multifaceted responses. Ultimately, the speed of processing is often limited by the hardware used; while systems employing Graphics Processing Units or Tensor Processing Units can speed up computations, the demand for resources can still be high, especially when multiple requests are handled simultaneously. These factors contribute to the significant latency experienced when interacting with LLMs.

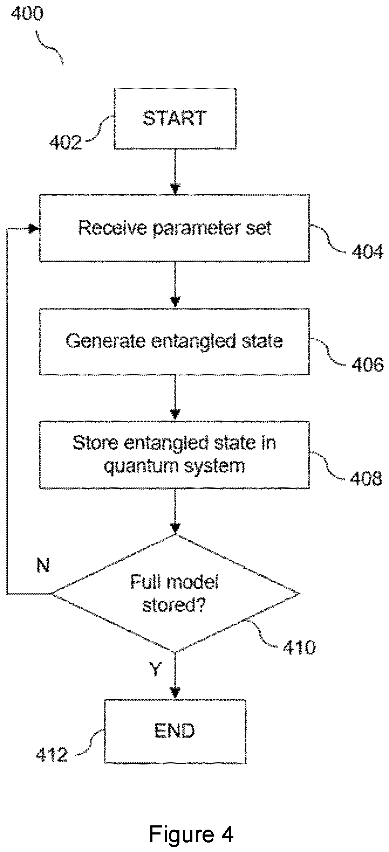

Figures 4 to 6 exemplify use of quantum entanglement techniques to encode and query a trained Neural Network (NN) or LLM (i.e. trained models), according to aspects of the invention. The present invention enhances the efficiency of trained models such as LLMs by leveraging the advantages provided by quantum computing techniques, enabling significantly faster query response times.

According to the present invention, classical data that represents the inputs and outputs (or 'parameter sets') of a trained model can be encoded as quantum states to allow processing by quantum devices. Amplitude encoding can be used to allow classical vectors (e.g. $[x_0, \cdots, x_{N-1}]$) which represent the parameter sets of a trained model to be encoded as quantum states (e.g. $\Sigma_i x_i |i\rangle$). Next, the encoded inputs/outputs of a trained model (such as an LLM) can be entangled and stored in a quantum system so that the quantum system can be queried to determine the behaviour of the trained model. Finally, upon receiving an input at time *time*, the stored entangled states can be measured to quickly query the trained model and determine the corresponding output.

Figure 4 shows a flow diagram of a method 400 for storing a trained model using a quantum system, in accordance with an aspect of the present disclosure. The method 400 may be carried out at a quantum computer, such as the quantum computer 140 of the example computing system 100 shown in figure 1.

The method 400 begins at step 402 and proceeds to step 404.

At step 404 the method 400 comprises receiving at least one parameter set representative of a trained model. The at least one parameter set comprises one or more parameters from a trained model, such as at least one input and at least one output. In an example, the parameter set includes corresponding input, time and output values from e.g. the trained model 300 outlined above and depicted in Table 1. For example, at step 404 the values corresponding to the first row of Table 1 may be received i.e. (0,0,0). As noted above, in the example of Table 1 the input and output values are vectors of length 1 and the time value is a scalar. In more complicated examples, the input and output may represent more complex objects, such as natural language syntax, words and sentences.

Step 404 may be carried out by the classical computer 130, and the classical computer may receive the parameter set for a trained model which executes either locally on classical computer 130 or remotely (e.g. on third party computer systems 204).

At step 406 the method 400 comprises generating at least one entangled state based on the at least one parameter set. In examples, generating an entangled state comprises initialising qubits to represent each input/time/output set:

$$\frac{1}{\sqrt{N}} \Sigma |input, time, output\rangle$$

and using quantum gates to create entanglement between the corresponding input/time/output values. The entangled state can be stored in a quantum system or quantum device comprising one or more qubits. Once stored in a quantum system, upon receiving e.g. input at time *time*, measuring the corresponding entangled state allows the corresponding output to be retrieved. Stated more generally, measurement of the entangled state enables at least one parameter of at least one parameter set to be determined. Advantageously, storing the trained model using a quantum system allows query times for obtaining the outputs of the trained model to be reduced.

In an example, generating the entangled state comprises encoding corresponding input, time and output values as quantum states (i.e. generating $|input\rangle$, $|time\rangle$ and $|output\rangle$), applying a Hadamard gate $H$ on the encoded input state to produce a superposition of all possible inputs $|input\rangle$, applying a CNOT gate to entangle the superposition of inputs with the encoded time state and applying a CNOT gate to further entangle the result with the output. The result of these operations is a state $\psi_n$ which can be stored in the quantum computer 140, such as in the quantum computing unit 142, quantum memory unit 144 and/or qubits 152.

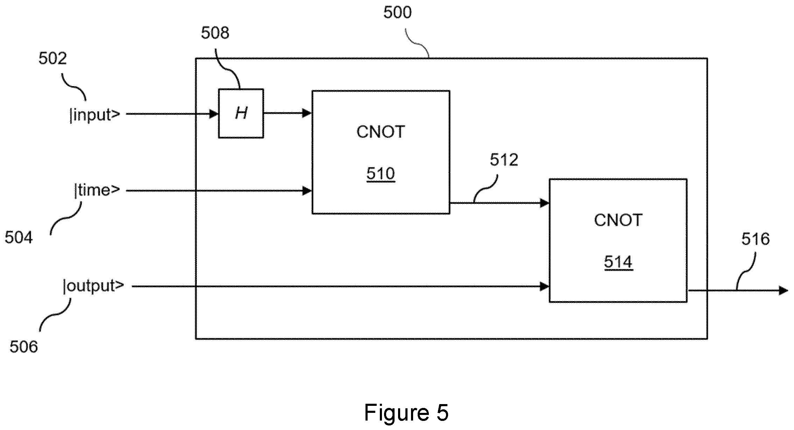

For example, we may consider generating an entangled state from the first row of Table 1, as illustrated in figure 5. Initially, the input 502, time 504 and the output 506 are each encoded in an initial state of $|0\rangle$. Using a Hadamard gate 508 on the encoded input state, a superposition of all possible inputs is produced:

$$H|0\rangle = \tfrac{1}{\sqrt{2}} (|0\rangle + |1\rangle),$$

applying a CNOT gate 510 entangles the superposition of inputs with the encoded time state:

$$CNOT\ (H|0\rangle \otimes |0\rangle)$$

and applying a CNOT gate 514 further entangles the result with the output to generate a state $\psi_0$ (516 in figure 5) which can be stored in the quantum computer 140:

$$\psi_0 = CNOT(CNOT(H|0\rangle \otimes |0\rangle), |0\rangle).$$

Returning to figure 4, at step 408 the method 400 comprises storing the entangled state in a quantum system. Step 408 may be carried out by the quantum computer 140, and each of the states generated during step 406 may be stored in the quantum computing unit 142, quantum memory unit 144 and/or qubits 152 of the quantum computer 140.

As a result of carrying out steps 404 to 408 once, the quantum computer 140 will store a single quantum state (e.g. $\psi_0$) which represents an input-time-output triplet of a trained model. As will be appreciated, to fully embody the trained model illustrated in Table 1 in the quantum computer 140, steps 404 to 408 must be repeated for each parameter set or input-time-output triplet of the trained model (i.e. repeat for each row of Table 1), so that e.g. $\psi_0$, $\psi_1$, $\psi_2$ and $\psi_3$ corresponding to the four parameter sets of trained model 300 are stored in the quantum device/quantum system.

At step 410 the method 400 comprises determining whether the model is complete. In other words, at step 410 it is determined whether a full representation of the trained model has been stored in the quantum device/quantum system. In an example, determining whether the model is complete may involve comparing the number $N$ of quantum states $\psi_n$ stored by the quantum system/quantum device with a predetermined threshold. The threshold may be equal to the number $N$ of unique parameter sets which characterise the trained model. In the example of Table 1, the number of unique input-time-output sets which characterise the trained model 300 is 4. Therefore, in the example of the model represented in Table 1, if the number of quantum states stored by the quantum computer 140 is less than 4 then the model is considered to be incomplete, whereas if the number of quantum states stored by the quantum computer 140 is 4 then the model is considered to be complete. For more complicated models, the threshold may correspond to a particular number (e.g. $10^6$, $10^9$, etc), which may be less than the total possible number of parameter sets which characterise the trained model.

If it is determined at step 410 that the model is not complete (in which case the 'N' branch from step 410 is followed), then the method 400 returns to step 404 where a further parameter set of input/time/output values is received, and the method proceeds to generate another entangled state $\psi_n$ based on this further set of values. When returning to step 404, it may be ensured that the further parameter set is different to all of the previous parameter sets already encoded, for example via comparison with a record of previously-encoded parameter sets stored in memory. As will be appreciated, the steps 404 to 408 are repeated until the trained model 300 is completely encoded and stored in the quantum device as a collection of $N$ quantum states $\psi_n$.

If it is determined at step 410 that the model is complete (in which case the 'Y' branch from step 408 is followed), then the method 400 proceeds to step 412 where the method 400 ends. At this point, a suitable number of parameter sets have been stored as quantum states in the quantum system/device, and the quantum system/device provides a complete quantum representation of the trained model.

By encoding classical data (input/time/output parameter sets) and the dynamic nature of LLMs into quantum states, the invention leverages the principles of quantum mechanics to achieve fast query responses. This approach significantly reduces query processing times, offering a novel and scalable solution for real-time language processing application.

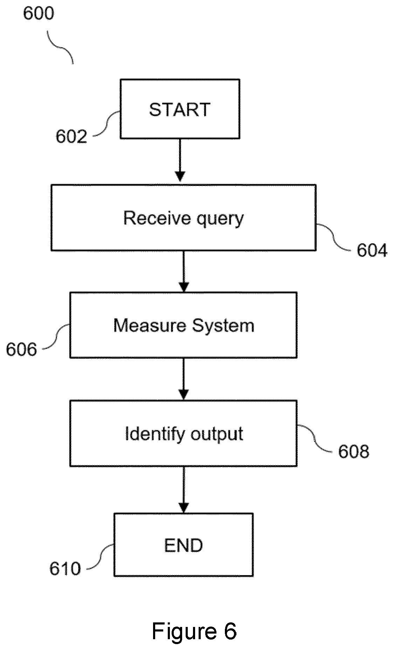

Figure 6 shows a flow diagram of a method 600 for identifying an output from a trained model stored using a quantum system or device, in accordance with an aspect of the present disclosure. The method 600 may be carried out at a hybrid quantum-classical quantum computer, such as the example computing system 100 shown in figure 1.

The method 600 begins at step 602 and proceeds to step 604.

At step 604 the method 600 comprises receiving a query, wherein the query comprises an input and a time. For example, the classical computer may receive a query having an input value and a time value, such as (0,0). In this example, the query may be for the trained model 300.

At step 606 the method 600 comprises measuring the quantum system stored in the quantum device. In particular, at step 606 the quantum system which stores the one or more states $\psi_n$ is measured, and the amplitudes are measured to recover the parameter sets which are representative of the trained model. In effect, once the quantum system has been measured then the trained model has been fully recovered and may be queried. For example, measuring a quantum system which is a complete representation of the trained model 300 shown in Table 1 allows each of the parameter values from Table 1 to be recovered. Once measured using e.g. the quantum computer 140, the parameter sets may be sent to and stored in the memory of the classical computer 130. In the example of trained model 300, once the quantum system has been measured, the parameter sets are determined so that the memory of the classical computer 130 stores a representation or copy of Table 1.

At step 608 the method 600 comprises determining the output. The output can be determined by inspecting the output value which corresponds to the input and time values received in the query at in step 604. Step 608 may be carried out by the classical computer by performing a lookup. In an example, step 608 may be carried out by the classical computer by performing a lookup of the parameter sets stored in the memory. In the example of trained model 300, inspecting the representation or copy of Table 1 in the memory of the classical computer 130 shows that the output corresponding to the query (0,0) is 0.

The method 600 ends at step 610. At this point, the output for a given input and time query has been accurately determined without requiring performance of any complex calculations directly on the trained model 300, and without having to e.g. send the query to a remote server which stores and performs processing on the trained model 300. The method 600 leverages the principles of quantum mechanics to achieve fast query responses. The present techniques provides the full output of a trained model on measurement and collapse of quantum states used to represent and store the trained model. Once the representation of the quantum states has been determined, it is a simple matter to lookup the output corresponding to an (input, time) query from the results. The current approach addresses the inherent variability of trained models such as LLMs and significantly reduces query processing times.

As will be appreciated, the example computing system 100 depicted in figures 1 and 2 can be used for implementing the present techniques, including the example methods 400 and 600. The example computing system 100 is a system for storing a trained model using a quantum system. The example computing system 100 comprises: a classical computer 130 for receiving at least one parameter set representative of the trained model, wherein the at least one parameter set comprises one or more parameters; and a quantum computer 140 for generating at least one entangled state based on the at least one parameter set and storing the at least one entangled state in a quantum system. Measurement of the entangled state enables at least one parameter of the at least one parameter set to be determined.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of storing a trained model using a quantum system, the method comprising:

   receiving at least one parameter set representative of the trained model, wherein the at least one parameter set comprises one or more parameters;

generating at least one entangled state based on the at least one parameter set; and

storing the at least one entangled state in a quantum system,

wherein measurement of the entangled state enables at least one parameter of the at least one parameter set to be determined.

2. The method of claim 1, wherein the parameter set comprises at least one input and at least one output, wherein the at least one input and the at least one output are represented as vectors.

3. The method of claim 2, wherein the parameter set comprises at least one time value, wherein the time value is a scalar, and wherein the output of the trained model is dependent on the input and the time value.

4. The method of any preceding claim, wherein the at least one entangled state is stored in a quantum device comprising one or more qubits.

5. The method of any preceding claim, wherein the method further comprises:
determining whether a full representation of the trained model is stored in the quantum device.

6. The method of any preceding claim, wherein the method further comprises:
repeating the receiving, generating and storing steps until a full representation of the trained model is stored in the quantum device.

7. The method of any preceding claim, wherein a plurality of entangled states are stored in the quantum device.

8. The method of any preceding claim, wherein generating at least one entangled state based on the at least one parameter set comprises:

initialising one or more qubits to represent the one or more parameters in the at least one parameter set; and
using quantum gates to create entanglement between the values of the at least one parameter set.

9. The method of any preceding claim, wherein generating at least one entangled state based on the at least one parameter set comprises:

encoding the parameter set as quantum states;
applying a Hadamard gate on the encoded input state to produce a superposition of all possible inputs;
applying a CNOT gate to entangle the superposition of inputs with the encoded time state; and
applying a CNOT gate to further entangle the result with the output, thereby producing a state which can be stored.

10. The method of any preceding claim, wherein the method further comprises:

receiving a query, wherein the query comprises an input and a time;
measuring the at least one entangled state in the quantum system to determine at least one parameter of the at least one parameter set; and
identifying the output from the recovered at least one parameter set.

11. The method of claim 10, wherein the method comprises measuring each entangled state in the quantum system to determine each parameter of each parameter set.

12. The method of claim 10 or claim 11, wherein identifying the output from the recovered at least one parameter set comprises performing a lookup in a lookup table.

13. The method of any preceding claim, wherein the trained model is a Large Language Model, LLM.

14. The method of any preceding claim, wherein the trained model is a naive Bayesian classifier

15. A system for storing a trained model using a quantum system, the system comprising:

a classical computer for receiving at least one parameter set representative of the trained model, wherein the at least one parameter set comprises one or more parameters; and
a quantum computer for generating at least one entangled state based on the at least one parameter set and storing the at least one entangled state in a quantum system,
wherein measurement of the entangled state enables at least one parameter of the at least one parameter set to be determined.

100

130

| 102 |
| 104 |
| 106 |
| 108 |
| 110 |

156

| 146 | 148 |
| 150 | 152 |

142

154

144

140

Figure 1

200

Figure 2

302     300

Input ⟶ [ Trained NN/ LLM ]     306

Time ⟶ ⟶ Output

304

Figure 3

400

START
402

Receive parameter set ⌒ 404

Generate entangled state ⌒ 406

Store entangled state in
quantum system ⌒ 408

N ◇ Full model
stored? ⌒ 410

Y

END
412

Figure 4

Figure 5

600

602 — START

604 — Receive query

606 — Measure System

608 — Identify output

610 — END

Figure 6

Europäisches
Patentamt

European
Patent Office

Office européen
des brevets

**Application Number**

EP 24 21 4615

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ACAMPORA GIOVANNI ET AL: "Quantum Implementation of Fuzzy Systems through Grover's Algorithm", 2018 IEEE INTERNATIONAL CONFERENCE ON FUZZY SYSTEMS (FUZZ-IEEE), IEEE, 8 July 2018 (2018-07-08), pages 1-8, XP033419766, DOI: 10.1109/FUZZ-IEEE.2018.8491579 [retrieved on 2018-10-12] * sections I-IV * ----- | 1-15 | INV. G06N3/02 G06N10/20 G06N10/60 ADD. G06N7/01 G06N20/00 |

**TECHNICAL FIELDS SEARCHED (IPC)**

G06N

The present search report has been drawn up for all claims

| Place of search | Date of completion of the search | Examiner |
|---|---|---|
| The Hague | 9 May 2025 | Keane, Shane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)